# EUROPEAN PATENT APPLICATION

(11) **EP 2 447 574 A1**
(43) Date of publication of application: **02.05.2012**
(21) Application number: 10792016.7
(22) Date of filing: 17.06.2010
(51) Int. Cl.: F16H 57/04, F16H 3/093, F16H 57/02

(54) **GEARBOX**

(30) Priority: 23.06.2009 JP 2009148262
(71) Applicant: AISIN AI Co., Ltd., Nishio-shi Aichi-ken 445-0006 (JP)
(72) Inventor: KAWAMOTO, Masaki, Nishio-shi Aichi 445-0006 (JP); KAYUKAWA, Norio, Nishio-shi Aichi 445-0006 (JP); YOSHIMI, Takuya, Nishio-shi Aichi 445-0006 (JP); UEMATSU, Toshiya, Nishio-shi Aichi 445-0006 (JP); KATO, Hiroyuki, Nishio-shi Aichi 445-0006 (JP); OGAMI, Shiro, Nishio-shi Aichi 445-0006 (JP)
(74) Representative: TBK
(86) International application number: PCT/JP2010/060304
(87) International publication number: WO 2010/150698

(57) **Abstract**

[Problem] To provide a transmission having a lubrication construction which is capable of efficiently supplying scooped-up lubrication oil to respective lubrication portions and which is little in power loss.

[Solution] The transmission is provided with shaft members rotatably carried in a case 10 to extend in an axial direction, a plurality of gears supported on the shaft members and drivingly connectable to the shaft members by shift clutches, a large-diameter gear 80 included in the plurality of gears and soaked at its lower part in lubrication oil contained in a lubrication oil storage region 91 formed at a lower portion of the case 10 for scooping up the lubrication oil when rotated, and a receiver 92 arranged to extend in the direction of a rotational axis for the large-diameter gear 80 for collecting the scooped-up lubrication oil and for flowing the collected lubrication oil toward lubrication portions, wherein the receiver 92 has a vertical wall 92d which enables the lubrication oil scooped up and splashing above the receiver to collide therewith, to flow down on a surface thereof and to be introduced to a collecting portion of the receiver, and an introducing portion 94 which enables the lubrication oil splashing toward between the receiver 92 and the large-diameter gear 80 to flow on a surface thereof and to be introduced to the collecting portion 92a by the inertia force thereof.

## Description

### TECHNICAL FIELD

The present invention relates to a transmission in which a speed change gear scoops up lubrication oil for lubrication.

### BACKGROUND ART

Heretofore, in vehicle transmissions which regulate the driving power and the rotational speed from an internal combustion engine or the like, there is one in which lubrication is carried out by scooping up lubrication oil by a speed change gear. For example, in one shown in Patent Document 1 which shows a lubrication mechanism of a transmission having an oil receiver, lubrication oil scooped up by a speed change gear is caught by an oil receiver and is supplied to tooth surfaces of other speed change gears and the interiors of respective shafts. The oil receiver is arranged above the speed change gear and takes the shape of a gutter opening upward. The lubrication oil splashed by being scooped up by the rotation of the speed change gear is caught at an opening portion of the gutter, and the lubrication oil caught is flown along the oil receiver to be supplied to various parts.

### PRIOR ART DOCUMENT

### PATENT DOCUMENT

Patent Document 1: JP2007-170491 A

### SUMMARY OF THE INVENTION

### PROBLEMS TO BE SOLVED BY THE INVENTION

However, the gutter shape of the oil receiver shown in Patent Document 1 is constructed so that the lubrication oil scooped up by the rotation of the speed change gear comes flying in a direction orthogonal to the lengthwise direction of the oil receiver, and hence, is difficult to collect lubrication oils which pass over and under the oil receiver. Thus, because a required quantity of lubrication oil cannot be collected and cannot be sufficiently supplied by the oil receiver, anxiety arises in that a scarcity of lubrication oil occurs at tooth surfaces of other speed change gears as well as the interiors of the respective shafts. Further, it is unable to utilize for lubrication the whole quantity of the lubrication oil scooped up by the rotation of the speed change gear. This results in the speed change gear operating uselessly and hence, in a power loss in the transmission, thus giving rise to anxiety about large influences on the driving and the fuel efficiency of the vehicle.

The present invention has been made taking the aforementioned problems into consideration, and an object thereof is to provide a transmission having a lubrication construction which is capable of supplying scooped-up lubrication oil to respective lubrication portions without waste and hence, is little in power loss and high in efficiency.

### SOLUTION TO THE PROBLEMS

In order to solve the aforementioned problems, the feature of the invention according to Claim 1 resides in comprising a case, shaft members rotatably carried in the case to extend in an axial direction, a plurality of gears supported on the shaft members and drivingly connectable to the shaft members by shift clutches, a large-diameter gear included in the plurality of gears and soaked at its lower part in lubrication oil contained in a lubrication oil storage region formed at a lower portion of the case for scooping up the lubrication oil when rotated, and a receiver arranged to extend in the direction of a rotational axis for the large-diameter gear for collecting the lubrication oil scooped up upward and for flowing the collected lubrication oil toward lubrication portions, wherein the receiver has a vertical wall which enables the lubrication oil splashing above the receiver of the scooped-up lubrication oil to collide therewith, to flow down on a surface thereof and to be introduced to a collecting portion of the receiver, and an introducing portion which enables the lubrication oil splashing toward between the receiver and the large-diameter gear to flow on a surface thereof and to be introduced to the collecting portion of the receiver by its inertia force.

The feature of the present invention according to Claim 2, wherein in Claim 1, the large-diameter gear is a gear of the plurality of gears which rotates at all times during a vehicle traveling.

The feature of the present invention according to Claim 3, wherein in Claim 2, the transmission is a dual-clutch automatic transmission further comprising a first input shaft and a second input shaft which are coaxially and rotatably supported in the case and on which drive-side gears of the plurality of gears are arranged coaxially; a first output shaft and a second output shaft which are respectively arranged in the case in parallel to the first input shaft and on which driven-side gears of the plurality of gears are respectively rotatably supported; and a dual clutch having a first clutch for transmitting a rotational driving power of a prime mover to the first input shaft and a second clutch for transmitting the rotational driving power to the second input shaft; and wherein the large-diameter gear is a ring gear of a differential gear which is drivingly connected to the first output shaft and the second output shaft at all times.

### EFFECTS OF THE INVENTION

In the invention according to Claim 1, the receiver is provided with the vertical wall and the introducing portion. The vertical wall enables the lubrication oil that splashes above the receiver and toward between the receiver and the case, to come into collision with a wall surface thereof, to flow down on the wall surface and to be introduced to the collecting portion of the receiver. Further, the introducing portion catches at the upper surface thereof the lubrication oil that splashes toward between the receiver and the large-diameter gear, and enables the lubrication oil to flow on the upper surface and to be introduced to the collecting portion of the receiver by the inertia force of the lubrication oil itself. By providing the receiver with the vertical wall and the introducing portion, the lubrication oil scooped up by the large-diameter gear cannot pass over and under the receiver, so that much of the lubrication oil is collected to be introduced to the lubrication oil collecting portion of the receiver. Thus, since the lubrication oil scooped up by the large-diameter gear is utilized for lubrication without being wasted, there is not anxiety that tooth surfaces of other speed change gears and the interiors of respective shafts fall in scarcity of lubrication oil, so that reliability can be enhanced. Further, because the circulation of lubrication oil can be done efficiently, the power loss of the transmission can be restrained greatly.

In the invention according to Claim 2, the large-diameter gear is rotated at all times during the vehicle traveling. Thus, during the vehicle traveling, the lubrication oil is scooped up by the large-diameter gear at all times, and the supply of the lubrication oil does not discontinue. As a result, because the lubrication oil is reliably supplied to tooth surfaces of other speed change gears and the interiors of the respective shafts which are portions to be lubricated, there is no risk that the scarcity of lubrication oil takes place.

In the invention according to Claim 3, the transmission is a dual-clutch automatic transmission. In such a transmission, when one input shaft is in connection with an internal combustion engine through a clutch, it occurs that the other input shaft is not drivingly rotated, but either of output shafts is drivingly rotated by either of the input shafts during the vehicle traveling. In the dual-clutch automatic transmission like this, by using as the large-diameter gear which scoops up lubrication oil, the ring gear of the differential gear which is in driving connection with the first output shaft and the second output shaft at all times, it can be realized that the lubrication oil is scooped up at all times during the vehicle traveling, so that the lubrication capability of the transmission can be enhanced.

Further, the ring gear of the differential gear in the transmission is, generally, large in diameter of plurality of gears housed in a case, and it is often the case that the ring gear is located at a lower part. Thus, by selecting the ring gear of the differential gear as the large gear, it can be done to scoop up lubrication oil efficiently from the lubrication oil storage region formed at a bottom portion of the case. Further, the ring gear of the differential gear is configured as a final gear in the transmission. Thus, the resistance to stirring which is exerted on the ring gear is transmitted to an internal combustion engine being a driving source through the plurality of gears which have a reduction ratio depending on their shifted positions. As a result, it can be realized to reduce the power loss that the internal combustion engine suffers from the resistance to stirring exerted on the large-diameter gear.

### BRIEF DESCRIPTION OF THE DRAWINGS

[Figure 1] is a view showing the schematic construction of a transmission 1 in a first embodiment as viewed in the axial direction, wherein the 1-1 section of a receiver 92 in Figure 2 and some of gears are shown.
[Figure 2] is a schematic sectional view as viewed in the direction A in Figure 1, wherein a mission case 11 and a clutch housing 12 of a case 10 are shown in section and wherein sliding parts and lubrication oil housed in the case 10 are schematically shown.
[Figure 3] is a skeletal figure showing the entire structure of the transmission 1.
[Figure 4] is a perspective view showing a part of the receiver 92.
[Figure 5] is a view showing a transmission 111 in a second embodiment as viewed in the axial direction, wherein the 5-5 section of a receiver 192 in Figure 6 and some of gears are shown.
[Figure 6] is a schematic sectional view as viewed in the direction B in Figure 5, wherein the mission case 11 and the clutch housing 12 of the case 10 are shown in section and wherein the sliding parts and lubrication oil housed in the case 10 are schematically shown.

### FORMS FOR PRACTICING THE INVENTION

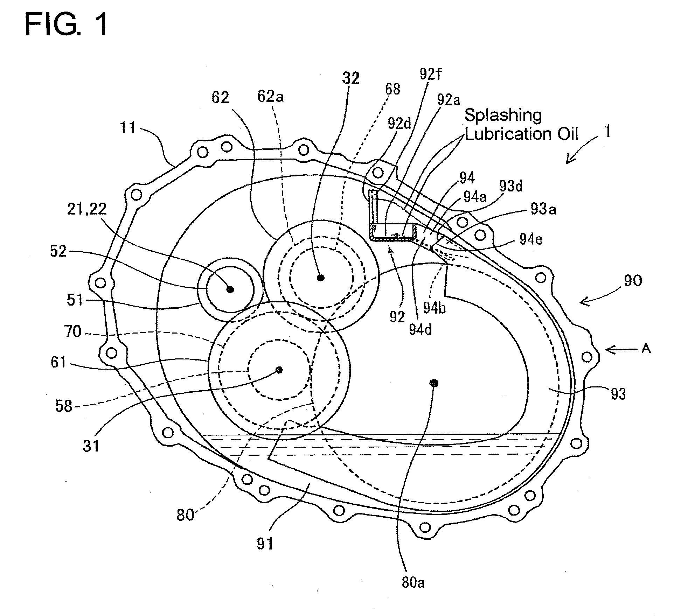

Hereafter, a transmission 1 in a first embodiment in which the present invention is embodied will be described with reference to Figures 1 to 4. As shown in Figures 1 to 3, the transmission 1 is a dual-clutch automatic transmission and is provided in a case 10 with a first input shaft 21, a second input shaft 22, a first output shaft 31 and a second output shaft 32 as shaft members. Further, in the case 10, there are provided a dual clutch 40, drive gears 51-57 (corresponding to "drive-side gears" in the present invention) for respective speed change stages, final reduction drive gears 58, 68, driven gears 61-67 for the respective speed change stages, a reverse gear 70, a ring gear 80 (corresponding to the "large-diameter gear" in the present invention), and a lubrication mechanism 90. The final reduction drive gears 58, 68, the driven gears 61-67 and the reverse gear 70 correspond to "driven-side gears" in the present invention.

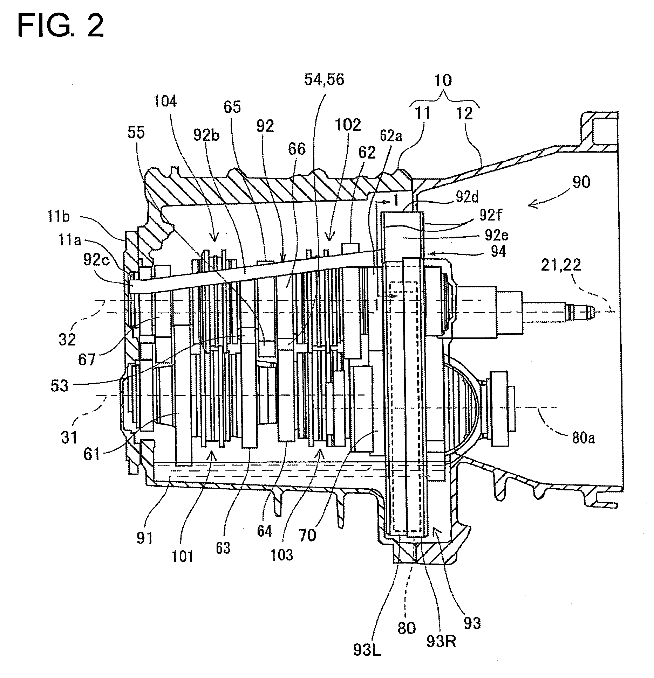

As shown in Figure 2, the case 10 has a mission case 11 and a clutch housing 12. The mission case 11 rotatably supports the respective shafts through a plurality of bearings and stores lubrication oil for lubricating lubrication portions including the aforementioned plurality of gears and the like. The clutch housing 12 has an end surface in contact with an end surface of the mission case 11 and is secured to the mission case 11 by bolt-fastening. The clutch housing 12 rotatably supports the respective shafts through a plurality of bearings and contains the dual clutch 40 therein.

The first input shaft 21 takes a hollow spindle-like shape and is supported by the bearings to be rotatable relative to the mission case 11. Bearing support portions and a plurality of external splines are formed on the outer surface of the first input shaft 21. A 1st speed drive gear 51 and a large-diameter 3rd speed drive gear 53 are formed directly on the first input shaft 21. A 5th speed drive gear 55 and a 7th speed drive gear 57 are press-fitted on the external splines formed on the outer surface of the first input shaft 21. Further, the first input shaft 21 has formed thereon a coupling portion connectable with a first clutch 41 of the dual clutch 40.

The second input shaft 22 takes a hollow spindle-like shape, is rotatably supported on the outer surface of a part of the first input shaft 21 through a plurality of bearings and is rotatably supported by a bearing relative to the clutch housing 12. That is, the second input shaft 22 is arranged to be coaxial with, and rotatable relative to, the first input shaft 21. Like the first input shaft 21, the second input shaft 22 has bearing support portions and a plurality of external gears formed on the outer surface thereof. The second input shaft 22 has formed thereon a 2nd speed drive gear 52 and a large-diameter 4th speed and 6th speed drive gear 54, 56. Further, the second input shaft 22 has formed thereon a coupling portion connectable to a second clutch 42 of the dual clutch 40.

The first output shaft 31 is supported by the bearings to be rotatable relative to the mission case 11 and the clutch housing 12 and is arranged in the mission case 11 in parallel to the first input shaft 21. On the outer surface of the first output shaft 31, the final reduction drive gear 58 is formed, and bearing support portions and a plurality of external splines are formed. Respective hubs 201 of shift clutches 101, 103 are press-fitted on the external splines of the first output shaft 31 through spline fittings. The final reduction drive gear 58 meshes with the ring gear 80 of a differential gear (differential mechanism). Furthermore, the first output shaft 31 has formed thereon support portions which freely rotatably support a 1st speed driven gear 61, a 3rd speed driven gear 63, a 4th speed driven gear 64 and the reverse gear 70.

The second output shaft 32 is supported by the bearings to be rotatable relative to the mission case 11 and the clutch housing 12 and is arranged in the mission case 11 in parallel to the first input shaft 21. Further, like the first output shaft 31, the second output shaft 32 has the final reduction drive gear 68 formed on the outer surface thereof and also has bearing support portions and a plurality of external splines formed on the outer surface thereof. Respective hubs 201 of shift clutches 102, 104 are press-fitted on the external splines of the second output shaft 32 through spline fittings. The final reduction drive gear 68 meshes with the ring gear 80 of the differential gear. Furthermore, the second output shaft 32 has formed thereon support portions which freely rotatably support a 2nd speed driven gear 62, a 5th speed driven gear 65, a 6th speed driven gear 66 and a 7th speed driven gear 67.

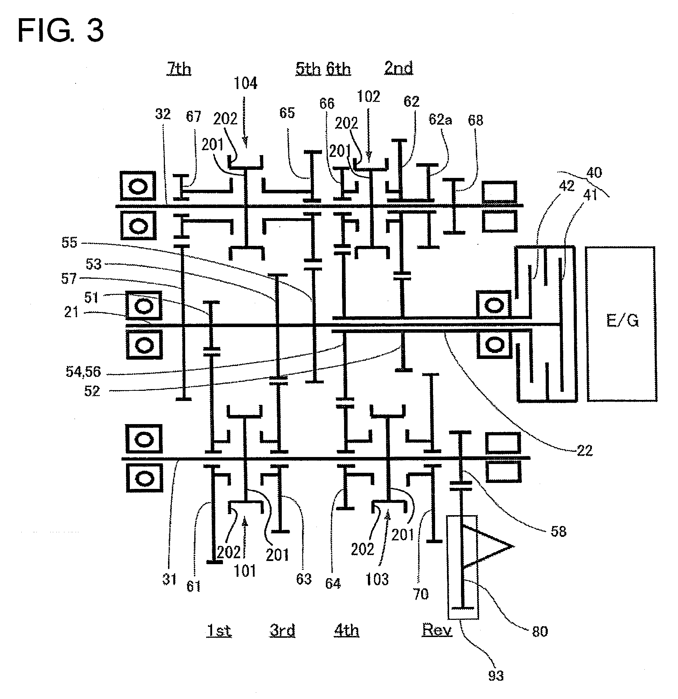

As shown in Figure 3, the dual clutch 40 has the first clutch 41 for transmitting the rotational driving power of an internal combustion engine E/G (corresponding to the "prime mover" in the present invention) to the first input shaft 21 and the second clutch 42 for transmitting the rotational driving power of the internal combustion engine E/G to the second input shaft 22. The dual clutch 40 is contained in the clutch housing 12 on the right side as viewed in Figure 2 and is provided in axial alignment with the first input shaft 21 and the second input shaft 22. The first clutch 41 is connected to a coupling shaft portion of the first input shaft 21, while the second clutch 42 is connected to a coupling shaft portion of the second input shaft 22. Thus, a high speed shift change is possible by selectively operating the first and second clutches 41, 42 relative to the first and second input shafts 21, 22 in response to a vehicle control command to switch the connection with the internal combustion engine E/G.

The reverse gear 70 is provided to be freely rotatable on a support portion which is formed on the first output shaft 31 for the reverse gear 70. Further, in the present embodiment, the reverse gear 70 always meshes with a small-diameter gear 62a which is formed bodily with the 2nd speed driven gear 62.

Each of the shift clutches 101, 102, 103 and 104 is provided with a hub 201 and a sleeve 202. The hub 201 takes a shape of a hollow disc with an internal spline and an external spline formed thereon and is press-fitted on the external spline of the first output shaft 31 or the second output shaft 32 through spline fitting. Each sleeve 202 meshes with the external spline of each hub 201 to be slidable relative to the hub 201 in the axial direction and, when slidden, is brought into meshing with a synchromesh gear portion of an associated one of the driven gears 61-67 for the respective speed change stages and the reverse gear 70. That is, the sleeves 202 have functions to selectively switch the meshing states and the non-meshing states with the synchromesh gears (not shown), provided on the driven gears 61-67 for the speed change stages and the reverse gear 70, by being axially slidden and to selectively couple the driven gears 61-67 or the reverse gear 70 with the first output shaft 31 and the second output shaft 32.

As shown in Figure 1, the ring gear 80 meshes with the final reduction drive gear 58 and the final reduction drive gear 68 and thus, is always in driving connection with the first output shaft 31 and the second output shaft 32. Further, the ring gear 80 is larger in diameter and also larger in the number of teeth than the final reduction drive gears 58, 68. The ring gear 80 is connected to driving road wheels (not shown) through a rotational shaft 80a as shaft member supported in the case 10 and the differential mechanism (not shown). That is, the ring gear 80 of the differential gear is a gear which is constituted as a final gear in the transmission to be rotated continuously during the traveling of the vehicle. Further, the ring gear 80 is located at a lower position than the other gears. Thus, a lower part of the ring gear 80 is soaked in the lubrication oil stored at the bottom portion of the mission case 11 and is able to scoop up the lubrication oil.

As shown in Figure 1, a separator 93 takes the form of an arc as viewed in the axial direction of the transmission 1 and is formed to surround a circumferential part which extends from a lubrication oil storage region 91 to an outside of the lubrication oil storage region 91, of the whole circumference of the ring gear 80. The separator 93 serves to stabilize the quantity and splashing direction of the lubrication oil scooped up by the rotation of the ring gear 80 by surrounding the circumferential part of the ring gear 80. The separator 93 takes a U-Ietter shape to follow the shape of the axial section at the circumferential part of the ring gear 80.

Further, in the present embodiment, the separator 93 is constituted to take the U-Ietter shape in section by overlapping two left and right separable side members 93L, 93R, each taking an L-letter shape in section, at bottom portions thereof. The left side member 93L is secured to the mission case 11 by means of bolts (not shown). Likewise, the right side member 93R of the separator 93 is secured to the clutch housing 12 by means of bolts (not shown). The separator 93 is assembled in such a way that when the clutch housing 12 is brought into contact with, and is secured to, the mission case 11 by bolt-fastening, the two side members 93L, 93R come close to opposite side surfaces of the ring gear 80 from the left and right and face the outer surface of the ring gear 80. Further, a lower part of the separator 93 resides in the lubrication oil storage region 91. Thus, the lower part of the separator 93 partitions the lubrication oil stored around the circumferential part of the ring gear 80 from the remainder of the lubrication oil stored in the mission case 11. This sets the quantity of lubrication oil agitated by the rotating ring gear 80.

The lubrication mechanism 90 has the lubrication oil storage region 91 and a receiver 92. As shown in Figures 1 and 2, the lubrication oil storage region 91 is a region which stores lubrication oil at the bottom portion of the mission case 11. The lubrication oil storage region 91 enables the stored lubrication oil to be scooped up by the rotation of the ring gear 80 above the ring gear 80. Further, the lubrication oil scooped up by the ring gear 80 splashes above the ring gear 80 and is collected by the receiver 92.

The receiver 92 is a member which is secured by bolt-fastening to an upper part of the mission case 11 but is different from the mission case 11. The receiver 92 has a collecting portion 92a which, as shown in Figure 2, is provided at one end of the receiver 92 for receiving (collecting) lubrication oil. The receiver 92 has a vertical wall 92d for collecting the lubrication oil splashing above the receiver 92 by enabling the lubrication oil to come into collision therewith and to flow down on the surface thereof and for introducing the lubrication oil to the collecting portion 92a and an introducing portion 94 for catching at a surface thereof the lubrication oil which splashes toward between the receiver 92 and the ring gear 80, and then, for introducing the lubrication oil to the collecting portion 92a by utilizing the inertia force of the splashing lubrication oil to make the same to slide on the surface thereof. The introducing portion 94 comprises an introducing path 94a with side walls 94d on both sides thereof and a tongue portion 94b which does not have any side walls. The receiver 92 also has a flow channel 92b for flowing the collected lubrication oil therethrough to supply the same toward respective lubrication portions and a supply port 92c formed at the other end thereof for supplying the lubrication oil to the respective output shafts 31, 32 or the like. The lubrication portions referred to herein mean tooth surfaces of the respective gears and the respective shift clutches 101-104 which are lubricated by being supplied with lubrication oil from outsides, and support portions being the bearings for the respective gears which are supplied with lubrication oil through the interiors of the respective shafts.

The receiver 92 is extended in the rotational axis direction of the ring gear 80 and is arranged downward at a predetermined angle from a starting point at one end thereof. The flow channel 92b of the receiver 92 takes a gutter shape which is a U-shape in the section orthogonal to the rotational axis direction of the ring gear 80 and which opens on an upper side thereof.

An end portion at one end of the receiver 92 is formed as the introducing path 94a which constitutes the introducing portion 94 by bending the flow channel 92b at a right angle to extend a predetermined length while keeping the gutter shape taking the U-shape in section. The introducing path 94a is formed and arranged so that an upper surface of a bottom wall 94c of the introducing path 94a becomes an approximately tangential line to the outer circumference of the ring gear 80 when the upper surface is extended as it goes.

The both side walls 94d of the introducing path 94a are formed to have an inside distance therebetween which almost agrees in width to an inside distance between the left side member 93L and the right side member 93R of the separator 93 surrounding the ring gear 80. Further, end surfaces 94e of the both side walls 94d of the introducing path 94a are held in contact with end surfaces 93d at an upper end portion 93a of the separator 93.

The bottom wall 94c of the introducing path 94a is extended from the position where the both sides wall 94d are in contact with the end surfaces 93d of the separator 93, toward the external surface of the ring gear 80. And, the bottom wall 94c is extended to the position where a slight gap is secured between a lower surface of the bottom wall 94c and the external surface of the ring gear 80, so that the tongue portion 94b is formed constituting the introducing portion 94.

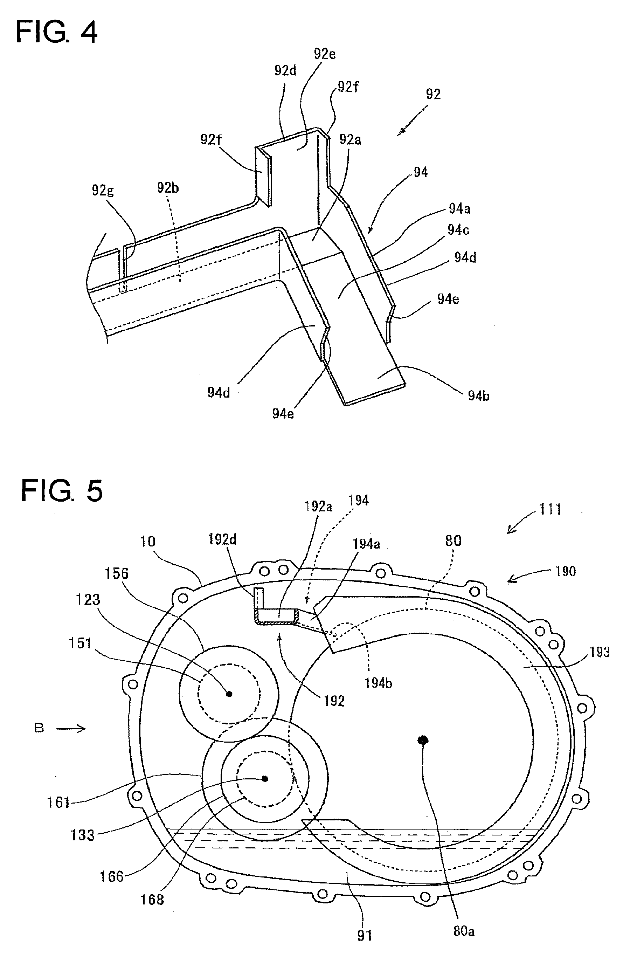

As shown in Figure 4, the collecting portion 92a is provided at a bent portion of the L-letter receiver 92. The collecting portion 92a is a part which collects the splashing lubrication oil scooped up by the rotation of the ring gear 80 and therefore, is arranged at the position where most of the splashing lubrication oil falls down.

The side wall forming the collecting portion 92a is provided with the vertical wall 92d which is upright at a side wall on the side whose surface is orthogonal to the direction in which the splashing lubrication oil scooped up by the rotation of the ring gear 80 comes flying. The vertical wall 92d introduces the lubrication oil, being about to pass over the receiver 92, of the splashing lubrication oil to the collecting portion 92a by enabling such lubrication oil to come into collision with a flat surface 92e thereof and to flow down on the flat surface 92e.

The vertical wall 92d is extended close to an upper inner wall of the mission case 11. The flat surface 92e of the vertical wall 92d is provided at both sides thereof with bent portions 92f which are formed to be bent at a right angle to make surfaces thereof become parallel to the lubrication oil coming flying. Further, the vertical wall 92d is arranged at the position where it can cover a splashing range of the lubrication oil which splashes above the receiver 92 by being scooped up by the rotation of the ring gear 80, and is formed to have a predetermined dimension that makes such covering possible. The vertical wall 92d described above may be a separate member without being formed bodily with the receiver 92. Further, the bent portions 92f of the vertical wall 92d are for the purpose of making the splashing lubrication oil hard to go away from both ends of the vertical wall 92d, and a similar effect can be expected where the bent portion is provided on one side of both ends or where no bent portion is provided at the both ends. For an increase in the fluidity of the lubrication oil, it is desirable that a coating with, e.g., Teflon (registered trademark) or the like having the property of a low µ is made on the upper surface of the bottom wall 94c and the upper surface of the tongue portion 94b of the aforementioned introducing path 94a as well as on the flat surface 92e of the vertical wall 92d with which the splashing lubrication oil comes into collision.

The flow channel 92b extends in the rotational axis direction of the ring gear 80 and is for the purpose of flowing the lubrication oil collected at the collecting portion 92a therealong to supply the lubrication oil toward the respective lubrication portions of the transmission 1. In order to supply lubrication oil of a proper quantity by falling or dropping to the respective lubrication portions such as tooth surfaces of the respective gears and the shift clutches 101-104, the flow channel 92b is provided with a plurality of falling ports 92g (Figure. 4) over the respective lubrication portions. In order to supply the lubrication oil to each lubrication portion reliably from right above the same, the flow channel 92b may not be a straight shape but may take the shape transformed to correspond to the respective lubrication positions.

The supply port 92c is formed at the other end of the receiver 92 and is inserted into a cave which communicates with inflow grooves 11 a. The receiver 92 flows the lubrication oil from the supply port 92c to the cave communicating with the inflow grooves 11a and supplies the lubrication oil by way of the inflow grooves 11a to through holes of the first output shaft 31 and the second output shaft 32 in which such through holes are formed. Herein, the inflow grooves 11a mean oil passages which enable lubrication oil to flow into the through holes of the respective shafts 31, 32 and the like and are provided in a cover 11b which closes an end face opening portion of the mission case 11 on the same side as the other end side of the receiver 92.

Next, description will be made regarding the operation and function in the structure of the aforementioned embodiment. When the transmission 1 is started, a control device for the gear automatic transmission in the present embodiment operates the first and second clutches 41, 42 of the dual-clutch 40 and the respective shift clutches 101-104 in dependence on the operating states of the vehicle such as an opening degree of an accelerator, an engine rotation speed, a vehicle speed and the like. In an inoperative state, the first and second clutches 41, 42 of the dual-clutch 40 are both released, and the respective shift clutches 101-104 are at neutral positions.

When a shift lever (not shown) of the gear transmission is set to a forward position after starting the engine E/G with the vehicle stopped, the control device slides the sleeve 202 provided on the shift-clutch 101 to mesh the sleeve 202 with a synchronizing gear portion of the driven gear 61 at the speed change stage and brings other respective clutches into neutral positions to establish a 1st speed stage. When the engine E/G exceeds a predetermined low rotational speed with an increase in the opening degree of the accelerator, the control device gradually increases the engagement force of the first clutch 41 of the dual clutch 40 to meet the opening degree of the accelerator. Thus, the driving torque is transmitted from the first clutch 41 to the ring gear 80 of the differential gear through the first input shaft 21, the 1st speed gear train 51, 61, the shift-clutch 101, the first output shaft 31 and the final reduction drive gear 58, whereby the vehicle starts to travel at the 1st speed.

When the operating state of the vehicle becomes the state suitable for the 2nd speed traveling with an increase in the opening degree of the accelerator or the like, the control device first establishes a 2nd speed stage by sliding the sleeve 202 provided on the shift clutch 102 to mesh the sleeve 202 with a synchronizing gear portion of the driven gear 62 at the speed change stage, then switches the dual-clutch 40 to the second clutch side for a 2nd speed traveling, and subsequently, releases the sleeve 202 of the shift clutch 101. Thus, the driving torque is transmitted from the second clutch 42 to the ring gear 80 of the differential gear through the second input shaft 22, the 2nd speed gear train 52, 62, the shift clutch 102, the second output shaft 32 and the final reduction drive gear 68, whereby the vehicle travels at the 2nd speed. In the same manner, for each of the 3rd-7th speeds, the control device successively selects speed change stages meeting the operating state of the vehicle and alternately selects the first clutch 41 and the second clutch 42, so that the traveling is carried out at the speed change stage meeting the state.

When the shift lever of the gear transmission is set to a reverse position in the vehicle stop state with the engine E/G operating, the control device detects such shifting, slides the sleeve 202 provided on the shift-clutch 103 to mesh the sleeve 202 with a synchronizing gear portion of the reverse gear 70, and brings other respective clutches into the neutral positions to establish a reverse stage. At this time, the reverse gear 70 is held at all times in meshing with the small-diameter gear 62a formed bodily with the driven gear 62 at the speed change stage. Thus, the driving torque is transmitted from the second clutch 42 to the ring gear 80 of the differential gear through the second input shaft 22, the 2nd speed gear train 52, 62, 62a, the reverse gear 70, the shift clutch 103, the first output shaft 31 and the final reduction drive gear 58, whereby the vehicle starts to reverse.

Next, description will be made regarding the operation of the lubrication mechanism 90. As mentioned earlier, during the forward traveling in which lubrication is especially required in the transmission of the vehicle, the ring gear 80 of the differential gear is continuously rotated through the final reduction drive gear 58 or 68 of the transmission 1. Therefore, the lubrication oil is scooped up at all times from the lubrication oil storage region 91 constituting the lubrication mechanism 90 in which the lubrication oil is stored at the bottom of the mission case 11. The lubrication oil scooped up by the rotation of the ring gear 80 is splashed in the tangential direction of the outer circumference of the ring gear 80. However, for the ring gear 80, the separator 93 is provided to surround a circumferential part which extends from the lubrication oil storage region 91 to the outside of the lubrication oil storage region 91, of the whole circumference of the ring gear 80. Therefore, most of the lubrication oil splashed is splashed in the direction in which the receiver 92 is arranged, that is, in the direction in which the upper side end portion 93a of the separator 93 opens.

The receiver 92 takes a gutter shape opening upward. With this configuration, the lubrication oil in a predetermined ratio to the splashing lubrication oil falls down to be collected in the collecting portion 92a formed at the inside of the gutter shape.

Further, the lubrication oil splashed above the receiver 92 comes into collision with the flat surface 92e of the vertical wall 92d provided on the receiver 92 and flows down on the flat surface 92e to be collected in the collecting portion 92a which is provided at a lower part of the vertical wall 92d.

Furthermore, the lubrication oil which is splashed toward between the receiver 92 and the ring gear 80 is lead by the tongue portion 94b and the introducing path 94a which are the introducing portion 94 provided on the receiver 92 and is collected in the collecting portion 92a. Specifically, most of the lubrication oil splashed toward between the receiver 92 and the ring gear 80 is caught at the tongue portion 94b and the upper surface of the bottom wall 94c of the introducing path 94a which is formed to continue with the upper surface of the tongue portion 94b and goes up obliquely above by flowing on the upper surface by the inertial forces that respective lubrication oil drops have, to be collected in the collecting portion 92a. In the present embodiment, the tongue portion 94b and the upper surface of the bottom wall 94c of the introducing path 94a are formed as a surface on which the lubrication oil goes up against the direction of gravity. Nevertheless, it has been verified by the inventors that because the lubrication oil scooped up by the rotation of the large-diameter ring gear 80 is large in speed and hence, also large in inertia force, the lubrication oil can satisfactorily go up against the direction of gravity.

In this manner, most of the lubrication oil scooped up by the rotation of the ring gear 80 is collected in the collecting portion 92a without being wasted. Then, thanks to the gravity, the lubrication oil flows down from the collecting portion 92a along the flow channel 92b, and the lubrication oil of a proper quantity falls down or drops from each of the falling ports 92g provided at right places to each of the lubrication portions such as the tooth surfaces of the respective gears, the respective shift clutches and the like, whereby the lubrication can be carried out. Further, from the supply port 92c formed at the other end of the receiver 92, the lubrication oil is supplied to the through holes of the first output shaft 31 and the second output shaft 32 through the inflow grooves 11a. As a result, sufficient lubrication is done at the bearings constituting the support portions for the respective gears.

In the first embodiment, as clear from the foregoing description, the vertical wall 92d and the introducing path 94 are provided on the receiver 92. Thus, the lubrication oil which is scooped up by the ring gear 80 being a large-diameter gear is collected without being wasted and is utilized for lubrication. As a result, anxiety does not arise in that scarcity in lubrication oil takes places at the tooth surfaces of the speed change gears 61-67 and the like and the interiors of the respective shafts 31, 32 and the like, and therefore, the reliability in operation can be enhanced. In addition, the circulation of the lubrication oil can be done efficiently, so that the power loss in the transmission can be reduced greatly.

Further, the transmission 1 is a dual-clutch automatic transmission. In the transmission 1, when one of the input shafts 21 or 22 is connected with the internal combustion engine E/G through the clutch 41 or 42, it occurs that the other input shaft 22 or 21 is not drivingly rotated, but either of the output shaft 31, 32 is rotationally driven by either of the input shafts 21, 22 during the vehicle traveling. In the dual-clutch automatic transmission like this, it is carried out that the lubrication oil can be scooped up at all times during the vehicle traveling, by utilizing as a large-diameter gear for scooping up lubrication oil the ring gear 80 of the differential gear which is held at all times in rotational connection with the first output shaft 31 and the second output shaft 32. Thus, the lubrication oil can be stably supplied to the receiver 92, so that the lubrication oil can be efficiently circulated in the interior of the transmission 1.

Further, generally, it is often the case that of the plurality of gears housed in the mission case 11, the ring gear 80 is large in diameter and is placed at a lower part. For this reason, by taking the construction to scoop up the lubrication oil by the ring gear 80, the lubrication oil can be scooped up further efficiently from the lubrication oil storage region 91 which stores the lubrication oil at the bottom portion of the mission case 11. Furthermore, the ring gear 80 of the differential gear is constituted as a final gear in the transmission 1. Thus, the resistance to stirring which is exerted on the ring gear 80 is transmitted to the internal combustion engine E/G being a driving source through the plurality of gears which have a reduction ratio depending on the shifted positions thereof. Therefore, it can be realized to reduce the influence that the resistance to stirring by the ring gear 80 exerts on the internal-combustion engine E/G.

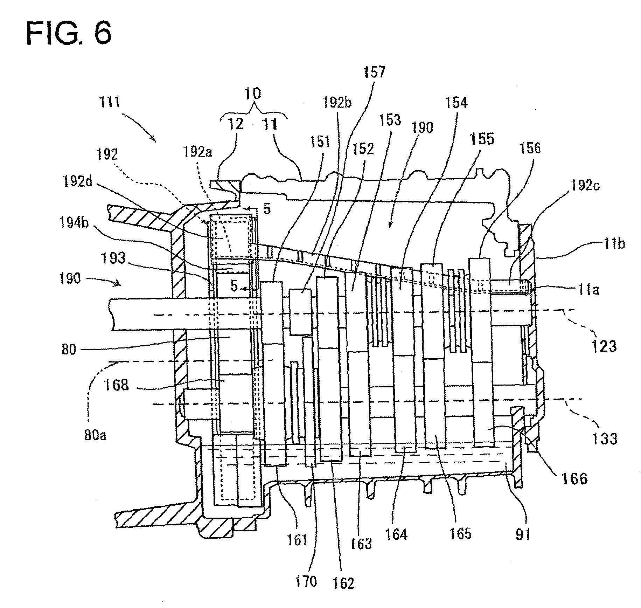

Next, the second embodiment will be described with reference to Figure 5 and Figure 6. The construction of a transmission 111 in the second embodiment mainly differs in that it is a manual transmission though the transmission 1 in the first embodiment is the dual-clutch automatic transmission. In this connection, the construction differs in gears or the like of the transmission 111. Other constructions are the same as those in the first embodiment and therefore, will be omitted in detail description thereof. Further, the operation of the manual transmission 111 will be omitted from description as being well known, and hereinafter, the differences only will be described.

As shown in Figure 5 and Figure 6, the transmission 111 being a manual transmission is provided in the mission case 11 with an input shaft 123 and an output shaft 133 as shaft members, drive gears 151-156 at respective speed change stages, driven gears 161-166 at the respective speed change stages, a final reduction drive gear 168, a reverse gear 170, the ring gear 80 (corresponding to the "large-diameter gear" in the present invention), and a lubrication mechanism 190. A separator 193 is provided for the ring gear 80. Like the separator 93 in the first embodiment, as shown in Figure 5, the separator 193 takes an arc shape, as viewed in the axial direction of the transmission 111, and is formed to surround a circumferential part which extends from the lubrication oil storage region 91 to the outside of the lubrication oil storage region 91, of the whole circumference of the ring gear 80.

The input shaft 123 is formed to be a spindle shape and is supported through bearings to be rotatable relative to the mission case 11. Then, on the outer surface of the input shaft 123, there are directly formed a 1st speed drive gear 151, a 2nd speed drive gear 152 and a small-diameter gear 157 which meshes with the reverse gear 170 through a counter gear (not shown). And, the input shaft 123 is formed on the outer surface thereof with support portions which freely rotatably support respective gears, and a plurality of external splines. On the external splines of the input shaft 123, respective hubs of respective shift clutches are press-fitted through spline-fittings, and a 3rd speed drive gear 153 to a 6th speed drive gear 156 are freely rotatably supported on the support portions. The input shaft 123 is connected with a crankshaft of an internal combustion engine E/G (not shown) through a clutch and inputs the driving power to the transmission 111. That is, the input shaft 123 corresponds to the first input shaft 21 and the second input shaft 22 in the first embodiment. Then, in the interior of the input shaft 123, there is formed a through hole in which the lubrication oil is flown to lubricate the support portions being lubrication portions for the respective gears.

The output shaft 133 is rotatably supported through bearings relative to the mission case 11 and the clutch housing 12 and is arranged in the mission case 11 in parallel to the input shaft 123. Further, on the outer surface of the output shaft 133, there are directly formed a 3rd speed driven gear 163 to a 6th speed driven gear 166 and the final reduction drive gear 168. Furthermore, on the outer surface of the output shaft 133, there are formed support portions which freely rotatably support respective gears, and a plurality of external splines. Then, respective hubs of respective shift clutches are press-fitted on the external splines of the output shaft 133 through spline-fittings, and a 1st speed driven gear 161, a 2nd speed driven gear 162 and the reverse gear 170 are freely rotatably supported on the support portions.

The output shaft 133 is rotationally connected to either of the driven gears and rotates the ring gear 80 of the differential gear through the final reduction drive gear 168 formed on the output shaft 133 to output the driving power from the transmission 111. The output shaft 133 corresponds to the first output shaft 31 and the second output shaft 32 in the first embodiment. Further, in the interior of the output shaft 133, there is formed a through hole in which lubrication oil flows. Thus, the lubrication oil is supplied to the through holes of the input shaft 123 and the output shaft 133 by flowing the lubrication oil through the inflow grooves 11a which are provided in the cover 11b closing the opening portion on the other end side of the mission case 11 in the same manner in the first embodiment, whereby lubrication is carried out at the support portions as lubrication portions for the respective gears.

The ring gear 80 meshes with the final reduction drive gear 168 and is held in rotational connection with the output shaft 133 at all times. Further, the ring gear 80 is larger in diameter and also larger in the number of teeth than the final reduction drive gear 168. That is, the ring gear 80 of the differential gear is constituted as a final gear in the transmission and is a gear which is rotated at all times during the vehicle traveling. Furthermore, the ring gear 80 is arranged at a lower part than other gears. Thus, the lower portion of the ring gear 80 is kept soaked in the lubrication oil stored at the bottom portion of the mission case 11 and is able to scoop up the lubrication oil.

The lubrication mechanism 190 is the same in construction as the lubrication mechanism 90 in the first embodiment and has the lubrication oil storage region 91 and a receiver 192. As shown in Figures 5 and 6, the receiver 192 has a collecting portion 192a (corresponding to the collecting portion 92a in the first embodiment) provided at one end for receiving (collecting) lubrication oil, a vertical wall 192d (corresponding to the vertical wall 92b in the first embodiment) for collecting the lubrication oil splashing above the receiver 192 by enabling the lubrication oil to come into collision with a surface thereof and to flow down on the surface and for introducing the lubrication oil to the collecting portion 192a, and an introducing portion 194 (corresponding to the introducing portion 94 in the first embodiment) for catching at a surface thereof the lubrication oil splashing toward between the receiver 192 and the ring gear 80, for collecting the lubrication oil by enabling the same to slide on the surface by the utilization of inertia forces of splashing oil drops and for introducing the lubrication oil to the collecting portion 192a. Like the introducing portion 94 in the first embodiment, the introducing portion 194 comprises an introducing path 194a provided with side walls on both sides thereof and a tongue portion 194b which does not have any side walls. Further, the receiver 192 has a flow channel 192b (corresponding to the flow channel 92b in the first embodiment) for flowing the collected lubrication oil therethrough toward respective lubrication portions and a supply port 192c (corresponding to the supply port 92c in the first embodiment) formed on other end thereof. The supply port 192c supplies lubrication oil to the interiors of the respective shafts 123, 133 and the like through the inflow grooves 11a provided in the cover 11 b of the mission case 11 as mentioned earlier, and lubricates the support portions as lubrication portions for the respective gears.

In the transmission 111 as constructed above, lubrication oil is scooped up above the ring gear 80 at all times by the ring gear 80 of the differential gear which is continuously rotated during the vehicle traveling. Thus, the lubrication oil scooped up is effectively collected by the lubrication mechanism 190 which has the same function as the lubrication mechanism 90, and is efficiently circulated in the interior of the mission case 11, so that the same effects as those in the first embodiment can be obtained.

In the first and second embodiments, the respective introducing portions 94, 194 of the receivers 92, 192 may be formed to have the tongue portions 94b, 194b only without being provided with the introducing paths 94a, 194a, even in which case sufficient effects can be expected.

Although in the first and second embodiments, the separators 93, 193 are provided for the ring gears 80, there may be taken a construction that is not provided with such separators 93, 193. In this case, the tongue portions 94b, 194b at the respective introducing portions 94, 194 of the receivers 92, 192 are removed, instead of which the introducing paths 94a, 194a with the side walls may be extended to the vicinity of the outer circumference of the ring gears 80, so that the equivalent effects can be expected.

### INDUSTRIAL APPLICABILITY

A transmission according to the present invention having a lubrication mechanism which is capable of implementing the collection and circulation of lubrication oil effectively is suitable for use in various vehicles having a speed change mechanism.

### DESCRIPTION OF SYMBOLS

1,111...transmission, 10...case, 11...mission case, 12...clutch housing, 21...first input shaft, 22...second input shaft, 31...first output shaft, 32...second output shaft, 40...dual clutch, 41...first clutch, 42...second clutch, 51-57,151-157...drive gears at speed change stages, 58, 68, 168...final reduction drive gear, 61-67, 161-166...driven gears at speed change stages, 62a...small-diameter gear, 70, 170...reverse gear, 80...ring gear, 90, 190...lubrication mechanism, 91...lubrication oil storage region, 92, 192...receiver, 92a, 192a...collecting portion, 92b, 192b... flow channel, 92c, 192c...supply port, 92d, 192d...vertical wall, 94, 194...introducing portion, 94a, 194a...introducing path, 94b, 194b...tongue portion, 94c...bottom portion, 123...input shaft, 133...output shaft

## Claims

1. A transmission **characterized by** comprising:
a case,
shaft members rotatably carried in the case to extend in an axial direction,
a plurality of gears supported on the shaft members and drivingly connectable to the shaft members by shift clutches,
a large-diameter gear included in the plurality of gears and soaked at its lower part in lubrication oil contained in a lubrication oil storage region formed at a lower portion of the case for scooping up the lubrication oil when rotated, and
a receiver arranged to extend in the direction of a rotational axis for the large-diameter gear for collecting the lubrication oil scooped up upward and for flowing the collected lubrication oil toward lubrication portions,
wherein the receiver has a vertical wall which enables the lubrication oil splashing above the receiver of the scooped-up lubrication oil to collide therewith, to flow down on a surface thereof and to be introduced to a collecting portion of the receiver, and an introducing portion which enables the lubrication oil splashing toward between the receiver and the large-diameter gear to flow on a surface thereof and to be introduced to the collecting portion of the receiver by its inertia force.

2. The transmission in Claim 1, **characterized in that** the large-diameter gear is a gear of the plurality of gears which rotates at all times during a vehicle traveling.

3. The transmission in Claim 2, **characterized in that** the transmission is a dual-clutch automatic transmission further comprising:
a first input shaft and a second input shaft which are coaxially and rotatably supported in the case and on which drive-side gears of the plurality of gears are arranged coaxially;
a first output shaft and a second output shaft which are respectively arranged in the case in parallel to the first input shaft and on which driven-side gears of the plurality of gears are respectively rotatably supported; and
a dual clutch having a first clutch for transmitting a rotational driving power of a prime mover to the first input shaft and a second clutch for transmitting the rotational driving power to the second input shaft;
wherein the large-diameter gear is a ring gear of a differential gear which is drivingly connected to the first output shaft and the second output shaft at all times.
